# EUROPÄISCHE PATENTANMELDUNG

(11) **EP 0 706 256 A2**
(43) Veröffentlichungstag der Anmeldung: **10.04.1996**
(21) Anmeldenummer: 95114367.6
(22) Anmeldetag: 13.09.1995
(51) Int. Cl.: H02M 3/28

(54) **Schaltungsanordnung für einen Gleichspannungswandler**

(30) Priorität: 06.10.1994 DE 4435747
(71) Anmelder: BOSCH TELECOM ÖFFENTLICHE VERMITTLUNGSTECHNIK GmbH, D-65726 Eschborn (DE)
(72) Erfinder: Trick, Ulrich, Dr., D-65812 Bad Soden (DE); Volk, Thomas, D-35418 Buseck (DE)
(74) Vertreter: Voss, Klaus, Dipl.-Ing.

(57) **Zusammenfassung**

Ein für Netz- und Batteriebetrieb geeigneter Gleichspannungswandler soll eine hohen Wirkungsgrad haben und platzsparend aufgebaut werden können. Die Umschaltung von Netz- auf Batteriebetrieb soll ohne Unterbrechung erfolgen, und eine Batterie soll über den Gleichspannungswandler während des Netzbetriebs in geladenem Zustand gehalten werden.

Es sind mindestens zwei Pulsweitenmodulatoren vorgesehen, wovon einer die netzabhängige Gleichspannung primärseitig auf einen einzigen Transformator schaltet und ein anderer eine Batteriespannung ebenfalls primärseitig auf diesen Transformator schaltet, wenn die Netzspannung ausgefallen ist. Es ist eine Überwachungseinrichtung vorgesehen, welche beim Ausfall der Netzspannung den dafür zuständigen Pulsweitenmodulator abschaltet und den für die Batteriespannung zuständigen Pulsweitenmodulator einschaltet, so daß jeweils nur ein Pulsweitenmodulator in Betrieb ist und die Verbraucherspannungen übergangslos zur Verfügung stehen.

Mit nur einem Transformator für beide Betriebszustände hat der Gleichspannungswandler einen hohen Wirkungsgrad und es ist eine platzsparende Bauweise möglich. Durch einen besonderen Primärkreis für den Batteriebetrieb wird beim Ausfallen der Netzspannung die Stromversorgung ohne Unterbrechung aufrechterhalten.

## Beschreibung

Die Erfindung betrifft eine Schaltungsanordnung für einen Gleichspannungswandler nach dem Oberbegriff des Patentanspruchs 1.

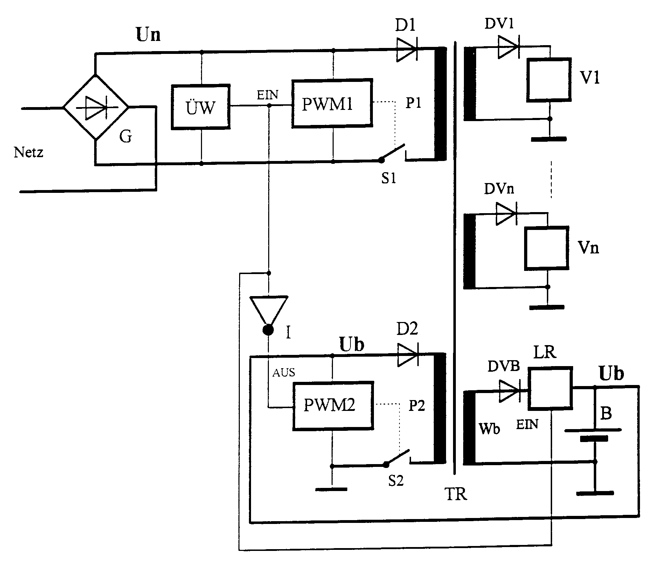

Aus der Deutschen Patentschrift DE 35 25 942 C2 ist ein Schaltnetzgerät bekannt, bei dem die gleichgerichtete Netzspannung über einen taktweise betreibbaren, steuerbaren Leistungsschalter auf einen Transformator gegeben wird. Der Steuereingang des Leistungsschalters ist mit einem Impulsbreiten-Modulator verbunden, der Schutzfunktionen aufweist. Diese Schutzfunktionen bewirken, daß bei Kurzschluß oder Überlast eine Strombegrenzung einsetzt. Die Einschaltdauer des Leistungsschalters, welcher die Primärspannung auf einen Transformator schaltet, wird in Abhängigkeit von mindestens einer Ausgangsspannung geregelt. Wie in der Figur 1 dargestellt ist, gibt das Schaltnetzgerät mehrere Sekundärspannungen ab, die verschiedenen Verbrauchern zur Verfügung stehen. Über die Art der Verbraucher ist nichts näheres ausgesagt. Auch die primärseitig angelegte Netzspannung ist nicht näher definiert, sondern es ist lediglich erwähnt, daß die durch den Pfeil angedeutete Netzspannung nach Eintritt in das Schaltnetzgerät zunächst gleichgerichtet wird. Wenn diese Netzspannung ausfällt, so stehen auch keine Verbraucherspannungen mehr zur Verfügung, weil keine Ersatzstromquelle (Batterie) vorgesehen ist.

Fur den Fall, daß die sogenannte Netzspannung in bekannter Weise mit einer Batterie gepuffert wäre, mußte die aus dem Stromversorgungsnetz vorhandene Wechselspannung (z. B. 230 V) zunächst auf eine für den Batteriebetrieb geeignete Spannung herabgesetzt werden. Hierzu ist im allgemeinen ein Transformator mit nachgeschalteter Gleichrichteranordnung vorzusehen, welche für eine ständige Ladung der Batterie sorgt. Bei einem derartigen Konzept ist außer dem im Schaltnetzteil vorhandenen Transformator ein weiterer Netztransformator erforderlich, wobei durch diese Reihenschaltung sich der Wirkungsgrad der gesamten Anordnung verschlechtert. Dies trifft besonders dann zu, wenn Transformatoren mit kleiner Leistung verwendet werden, wie dies beispielsweise in Komponenten der Kommunikations- und Vermittlungstechnik der Fall ist. Außerdem ist dann ein erhöhter Platzbedarf gegeben.

Die Aufgabe der Erfindung besteht darin, eine Schaltungsanordnung für einen Gleichspannungswandler anzugeben, die für Netz- und Batteriebetrieb geeignet ist, mit nur einem Transformator ausgerüstet ist und einen hohen Wirkungsgrad hat. Die Umschaltung von Netz- auf Batteriebetrieb soll ohne Unterbrechung erfolgen, und eine Batterie soll über den Gleichspannungswandler während des Netzbetriebes in geladenem Zustand gehalten werden.

Zur Lösung dieser Aufgabe ist eine Merkmalskombination vorgesehen, wie sie im Patentanspruch 1 angegeben ist.

Damit wird in vorteilhafter Weise erreicht, daß mit nur einem Transformator ein hoher Wirkungsgrad gegeben ist und eine platzsparende Bauweise möglich wird. Durch einen besonderen Primärkreis für den Batteriebetrieb wird beim Ausfall der Netzspannung die Stromversorgung ohne Unterbrechung aufrecht erhalten.

Ein Ausführungsbeispiel der Erfindung wird nachfolgend anhand einer Zeichnung näher erläutert.

In der Zeichnung ist das Prinzipschaltbild eines Gleichspannungswandlers dargestellt, welcher im wesentlichen aus einem Transformator TR besteht, der mindestens zwei Primärwicklungen P1, P2 aufweist. Eine der Primärwicklungen P1 ist mit der gleichgerichteten Netzspannung Un verbunden, welche von einem Pulsweitenmodulator PWM1 über ein elektronisches Schaltmittel S1 auf die Primärwicklung P1 geschaltet wird. Die Windungszahl dieser ersten Primärwicklung P1 ist dabei so ausgelegt, daß die vom Netz über eine Gleichrichteranordnung G angebotene Netzspannung Un so transformiert wird, daß die für die Verbraucher V1 bis Vn gewünschten Sekundärspannungen entstehen.

Es ist eine Überwachungseinrichtung ÜW vorgesehen, die feststellt, ob die Netzspannung Un vorhanden ist. Nur in diesem Fall wird der für die Netzspannung Un zuständige Pulsweitenmodulator PWM1 eingeschaltet. Gleichzeitig wird auch ein auf der Sekundärseite des Transformators TR angeordneter Laderegler LR eingeschaltet, welcher dafür sorgt, daß eine zur Aufrechterhaltung der Versorgungsspannung vorgesehene Batterie B im geladenen Zustand gehalten wird. Dafür kann innerhalb der Überwachungseinrichtung ÜW ein Optokoppler eingesetzt sein, dessen Leuchtdiode von der Netzspannung Un gespeist wird, und dessen Fototransistor den Logikpegel für die Einschaltung des Ladereglers LR liefert. Außerdem wird von der Überwachungseinrichtung ÜW über ein Logikgatter LG, welches in der Zeichnung lediglich als Inverter dargestellt ist, ein weiterer, für den Batteriebetrieb zuständiger Pulsweitenmodulator PWM2 ausgeschaltet.

Wenn die Netzspannung Un infolge eines Stromausfalls nicht mehr vorhanden ist, so wird dies von der Überwachungseinrichtung ÜW festgestellt. Dabei wird der für die Netzspannung Un zuständige Pulsweitenmodulator PWM1 ausgeschaltet und der für die Batteriespannung Ub zuständige Pulsweitenmodulator PWM2 eingeschaltet. Gleichzeitig wird auch der Laderegler LR ausgeschaltet, so daS in diesem Betriebszustand keine Batterieladung mehr stattfindet. Der für den Batteriebetrieb zuständige Pulsweitenmodulator PWM2 schaltet über ein elektronisches Schaltmittel S2 die Batteriespannung Ub auf die zweite Primärwicklung P2 des Transformators TR. Die Windungszahl dieser Wicklung P2 ist so ausgelegt, daß entsprechend der Batteriespannung Ub für die Verbraucher V1 bis Vn die gleichen Versorgungsspannungen entstehen, wie dies beim Netzbetrieb der Fall sein würde.

In Reihe mit den Primärwicklungen P1 und P2 sind Dioden D1 und D2 geschaltet, welche in Sperrichtung betrieben werden, wenn der jeweils andere Pulsweitenmodulator PWM2 bzw. PWM1 in Betrieb ist. Dadurch werden Rückwirkungen auf der Primärseite verhindert, so daß keine zusätzliche Belastung auftritt.

Die auf der Sekundärseite des Transformators TR angeordneten Dioden DV1 bis DVn und DVB dienen in bekannter Weise der Gleichrichtung der von den Sekundärwicklungen abgegebenen Spannungen. Auf der Sekundärseite des Transformators TR ist die beim Netzbetrieb zu ladende Batterie B wie ein Verbraucher angeschlossen, wobei die Windungszahl der dafür vorgesehenen Sekundärwicklung Wb entsprechend der Batteriespannung Ub ausgelegt ist. Da der Laderegler LR von der Überwachungseinrichtung ÜW abgeschaltet wird, wenn die Netzspannung Un nicht vorhanden ist, entsteht während des Batteriebetriebs keine zusätzliche Belastung durch den Ladekreis, so daß nur die für die Verbraucher V1 bis Vn zuständigen Sekundärwicklungen des Transformators TR in Betrieb sind.

Durch die Überwachungseinrichtung ÜW wird also sichergestellt, daß entweder der für die Netzspannung Un zuständige Pulsweitenmodulator PWM1 oder der für die Batteriespannung Ub zuständige Pulsweitenmodulator PWM2 in Betrieb ist, so daß beim Ausfall der Netzspannung Un und auch bei deren Wiederkehr die Spannungen für die Verbraucher V1 bis Vn ohne Unterbrechung zur Verfügung stehen.

## Patentansprüche

1. Schaltungsanordnung für einen Gleichspannungswandler, wobei Pulsweitenmodulatoren vorgesehen sind, die Impulse mit einer von der Belastung abhängigen Breite erzeugen und damit eine Primär-Gleichspannung auf einen Transformator takten, an dessen Sekundärwicklungen die Verbraucher-Gleichspannungen abgenommen werden,
**dadurch gekennzeichnet,**
daß mindestens zwei Pulsweitenmodulatoren (PWM1, PWM2) vorgesehen sind, wovon einer (PWM1) eine zum Beispiel von der Netzspannung erzeugte Gleichspannung (Un) primärseitig auf den einzigen Transformator (TR) schaltet und ein anderer (PWM2) eine Batteriespannung (Ub) ebenfalls primärseitig auf diesen Transformator (TR) schaltet,
daß jeweils nur einer der beiden Pulsweitenmodulatoren (PWM1, PWM2) in Betrieb ist, wobei eine Überwachungseinrichtung (ÜW) das Vorhandensein der netzabhängigen Gleichspannung (Un) feststellt, und dabei den für die Batteriespannung (Ub) zuständigen Pulsweitenmodulator (PWM2) abschaltet,
daß der für die Batteriespannung (Ub) zuständige Pulsweitenmodulator (PWM2) beim Ausfall der netzabhängigen Gleichspannung (Un) in Betrieb geht,
und daß eine besondere Sekundärwicklung (Wb) vorgesehen ist, woran als Verbraucher ein Laderegler (LR) und eine Batterie (B) angeschlossen ist.

2. Schaltungsanordnung nach Anspruch 1,
**dadurch gekennzeichnet**
daß die Überwachungseinrichtung (ÜW) einen Opto-Koppler ansteuert, dessen Leuchtdiode von der netzabhängigen Gleichspannung (Un) gespeist wird, und dessen Fototransistor den für die Batteriespannung (Ub) zuständigen Pulsweitenmodulator (PWM2) sperrt und damit außer Betrieb nimmt.

3. Schaltungsanordnung nach Anspruch 1,
**dadurch gekennzeichnet**
daß der Laderegler (LR) von der Überwachungseinrichtung (ÜW) nur dann eingeschaltet wird, wenn der von der Netzspannung gespeiste Pulsweitenmodulator (PWM1) arbeitet,
und daß somit die Batterie (B) als Verbraucher von der Ladung abgeschaltet ist, wenn der für die Batteriespannung (Ub) zuständige Pulsweitenmodulator (PWM2) in Betrieb ist.

4. Schaltungsanordnung nach Anspruch 1,
**dadurch gekennzeichnet**
daß an den Primärwicklungen des Transformators (TR) Entkopplungsdioden (D1, D2) angeschlossen sind, die einen Einfluß der induzierten Spannung auf den jeweils nicht in Betrieb befindlichen Pulsweitenmodulator (PWM2 oder PWM1) verhindern.
